# EUROPEAN PATENT APPLICATION

(11) **EP 2 541 085 A1**
(43) Date of publication of application: **02.01.2013**
(21) Application number: 10846602.0
(22) Date of filing: 05.11.2010
(51) Int. Cl.: F16C 33/20, C08K 3/04, C08K 3/30, C08K 3/38, C08L 101/12

(54) **SLIDE BEARING**

(30) Priority: 26.02.2010 JP 2010043222
(71) Applicant: Taiho Kogyo Co., Ltd, Toyota-shi Aichi 471-8502 (JP)
(72) Inventor: WATANABE, Kenji, Toyota-shi Aichi 471-8502 (JP); KABEYA, Yasunori, Toyota-shi Aichi 471-8502 (JP)
(74) Representative: Cabinet Plasseraud
(86) International application number: PCT/JP2010/069668
(87) International publication number: WO 2011/104939

(57) **Abstract**

A sliding bearing 1 includes a bearing alloy layer 2 which has annular grooves 2a and a ridge portion 2b formed thereon and an overlay layer 3 which is made from a low-friction synthetic resin and covers the surface of the bearing alloy layer, wherein the overlay layer 3 forms an uneven face so that the surface of the overlay layer 3 follows an uneven face of the surface of the bearing alloy layer 2. The ridge portion 2b is structured so as to be plastically deformed when a load is applied to the sliding bearing from a rotary shaft, and thereby be capable of making the sliding bearing conform to the rotary shaft.

In comparison with a conventional technology which makes the overlay layer 3 made from the low-friction synthetic resin worn and the sliding bearing conform to the rotary shaft, the sliding bearing according to the present invention can promptly make the sliding bearing conform to the rotary shaft because of being capable of making the ridge portion 2b plastically deformed and conform to the rotary shaft.

## Description

### Technical Field

The present invention relates to a sliding bearing, and more specifically relates to a sliding bearing that has a ridge portion provided on a sliding surface, which extends in the circumferential direction.

### Background Art

A sliding bearing is conventionally known which has annular or spiral grooves formed along a circumferential direction on a sliding surface of the sliding bearing, consequently has a ridge portion which extends in the circumferential direction and is formed between the adjacent annular grooves in the axial direction, and supports a rotary shaft with the top of each ridge portion. (Patent Literature 1)
The above described sliding bearing has a bearing alloy layer made from a copper-based bearing alloy or an aluminum-based bearing alloy formed so that the surface becomes flat, and has an overlay layer formed on the surface of this bearing alloy layer, which covers the surface with such a low-friction synthetic resin that a solid lubricant such as molybdenum disulfide and graphite is bound by a resin such as PAI. Then, the sliding bearing has annular or spiral grooves formed along the circumferential direction on the surface of this overlay layer, consequently has a ridge portion which extends in the circumferential direction and is formed between the adjacent annular grooves in the axial direction, and is consequently structured so as to support a rotary shaft with the top of each ridge portion.

### Prior Art Documents

### Patent Literature

Patent Literature 1: Japanese Patent Laid-Open No. 2004-211859

### Summary of Invention

### Problems to be Solved by the Invention

The above described sliding bearing has an overlay layer produced from a low-friction synthetic resin, and accordingly is excellent in low friction properties as compared with the case in which an overlay layer is made from a soft metal.
However, on the other hand, though the overlay layer made from the soft metal is excellent in the conformability between the sliding bearing and the rotary shaft because of causing plastic deformation at a comparatively low load, the low-friction synthetic resin has higher elasticity than the soft metal and accordingly results in securing the conformability not by the plastic deformation but by such a mechanism that one part of the low-friction synthetic resin is worn out. As a result, the sliding bearing has spent a longer period of time before securing the conformability than the case in which the soft metal is used.
The present invention is designed with respect to such circumstances, and provides a sliding bearing which can promptly secure the conformability as compared with the conventional one, while keeping the performance of being excellent in low friction properties, by using an overlay layer made from a low-friction synthetic resin.

### Means for Solving the Problems

Specifically, the present invention provides a sliding bearing which has annular or spiral grooves formed along a circumferential direction on a sliding surface of the sliding bearing, consequently has a ridge portion that extends in the circumferential direction and is formed between the adjacent annular grooves in the axial direction, and is consequently structured so as to support a rotary shaft with the top of each ridge portion, wherein
the sliding bearing includes: a bearing alloy layer which has the annular grooves and the ridge portion formed thereon; and an overlay layer which is made from a low-friction synthetic resin and covers the surface of the bearing alloy layer, wherein the overlay layer forms an uneven face so that the surface of the overlay layer follows an uneven face of the surface of the bearing alloy layer, plastically deforms the ridge portion when a load is applied to the sliding bearing from the rotary shaft, and thereby makes the sliding bearing conform to the rotary shaft.

### Advantageous Effects of Invention

According to the above described structure, the sliding bearing can make itself conform to the rotary shaft by plastically deforming the ridge portion formed on the bearing alloy layer when a load has been applied to the sliding bearing from the rotary shaft. As a result, the sliding bearing can promptly secure the conformability as compared with the case in which the conformability is secured by a mechanism that the overlay layer of the low-friction synthetic resin is worn out.
On the other hand, the sliding bearing can secure excellent low friction properties due to the low-friction synthetic resin similarly to the conventional one, because the overlay layer is produced from the low-friction synthetic resin.

### Brief Description of Drawings

[Figure 1] Figure 1 is an enlarged cross-sectional view along an axial direction of a sliding bearing 1 of the present invention.
[Figure 2] Figure 2 is a view illustrating the result of a test of measuring a change of the surface shape occurring when a shaft has been pressed onto the surface of the sliding bearing.
[Figure 3] Figure 3 illustrates the result of a test of measuring the conformability and low friction properties between a sliding bearing and a rotary shaft.

### Mode for Carrying out the Invention

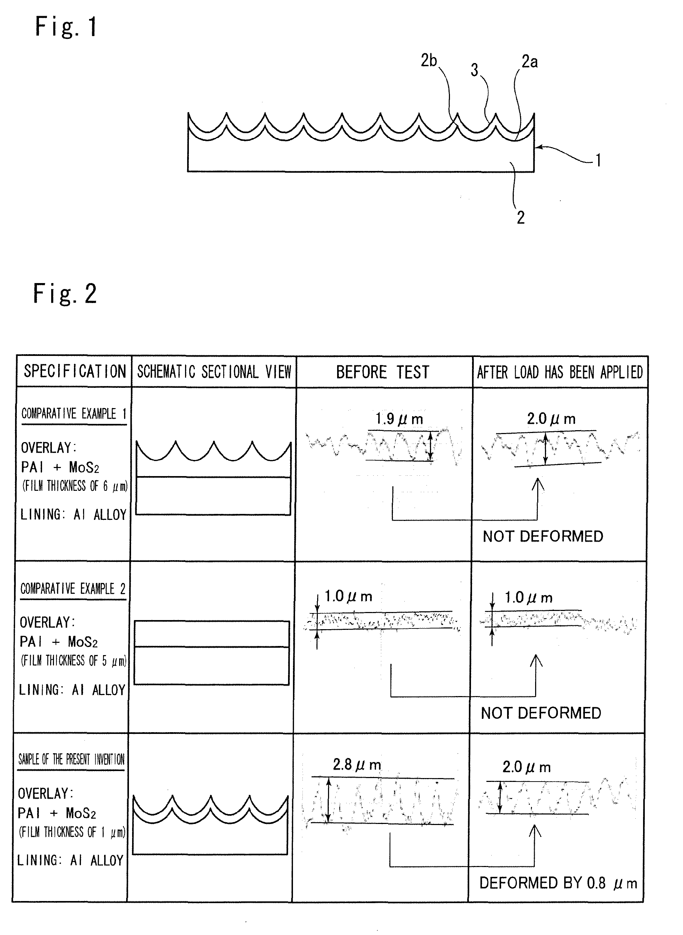

The present invention will be described below with reference to illustrated Examples. Figure 1 shows an enlarged cross-sectional view along an axial direction of the sliding bearing 1 which is formed so as to be a semicylindrical shape or a cylindrical shape. The above described sliding bearing 1 has a bearing alloy layer 2 formed on a back metal which is not illustrated, has annular or spiral grooves 2a formed along a circumferential direction on a sliding surface which is an internal circumferential surface of the bearing alloy layer 2, and consequently has a ridge portion 2b that extends in the circumferential direction and is formed between the adjacent annular grooves 2a in the axial direction.
Furthermore, the surface of the above described bearing alloy layer 2 is covered with an overlay layer 3, and this overlay layer 3 forms an uneven face which follows the uneven face of the surface of the bearing alloy layer 2.

The height of the ridge portion in the above described overlay layer 3 is preferably about 1 to 8 µm, because when the value exceeds 8 µm, seizure resistance decreases, and when the value is less than 1 µm, the height of the ridge portion 2b is too low and cannot show an effect of having provided the ridge portion. In addition, a pitch of the above described annular grooves 2a is preferably 0.1 to 0.4 mm, for instance. Accordingly, Figure 1 is drawn so that a scale of a longitudinal direction and a scale of a transverse direction are considerably greatly different.
A copper-based bearing alloy or an aluminum-based bearing alloy is used for the above described bearing alloy layer 2, and such a low-friction synthetic resin is used for the overlay layer 3 that a solid lubricant such as molybdenum disulfide and graphite is bound by a thermosetting resin such as PAI. The above described solid lubricant can include molybdenum disulfide (MoS₂), graphite, BN (boron nitride), tungsten disulfide (WS₂), PTFE (polytetrafluoroethylene), a fluororesin, Pb, or the like. These materials can be used alone or in combination with one or more other types.
In addition, the above described thermosetting resin can include a polyimide resin; a polyamide imide resin; a diisocyanate-modified resin, a BPDA-modified resin and a sulfone-modified resin of the above respective resins; an epoxy resin; a phenol resin; or the like. Among them, the polyamide imide resin is preferable.

The overlay layer 3 using the above described low-friction synthetic resin has relatively sufficient elasticity and is hard to be plastically deformed, but is more excellent in low friction properties than the bearing alloy layer 2 using the copper-based bearing alloy or the aluminum-based bearing alloy.
On the other hand, the bearing alloy layer 2 using the above described copper-based bearing alloy or aluminum-based bearing alloy has a larger coefficient of friction than the overlay layer 3 using the low-friction synthetic resin, but the ridge portion 2b is set so as to be more easily plastically deformed than the above described overlay layer 3 by forming the above described annular grooves 2a and the ridge portion 2b on the surface of the bearing alloy layer 2.
Incidentally, the film thickness of the overlay layer 3 is preferably about 2.5 µm or less, although somewhat varying according to a component composition of the overlay layer 3, because when the film thickness of the overlay layer 3 is made so thick, the overlay layer 3 itself is elastically deformed and prevents the top of the above described ridge portion 2b from being plastically deformed.

Figure 2 is a view illustrating the result of a test of measuring a change of the surface shape occurring when a shaft has been pressed onto the surface of a sliding bearing.
In the test, the sample of the present invention and the samples 1 and 2 of comparative examples are each formed into a halved shape of the sliding bearing, the shaft is penetrated through each sample, and the change of the surface shape occurring when a static load of 60 kN (bearing surface pressure of 84 MPa) has been applied is measured. In any sliding bearing, the aluminum-based alloy is used for the bearing alloy layer 2, and the low-friction synthetic resin is used for the overlay layer 3, which is formed by binding molybdenum disulfide with PAI.
The sample of the present invention is a sample in which the annular grooves 2a and the ridge portion 2b are formed on the surface of the bearing alloy layer 2, and the overlay layer 3 is formed on the surface of the bearing alloy layer 2 so as to have a film thickness of 1 µm. The height of the ridge portion 2b at this time was 2.8 µm.
The sample 1 of the comparative example is a sample in which the surface of the bearing alloy layer 2 is formed flatly, the overlay layer 3 made from a resin with the film thickness of 6 µm is formed on the surface thereof, and furthermore, annular grooves 3a and a ridge portion 3b which correspond to the above described annular grooves 2a and the ridge portion 2b are formed on the overlay layer 3. The height of the ridge portion 2b at this time was 1.9 µm.
In addition, the sample 2 of the comparative example is a sample in which the surface of the bearing alloy layer 2 is formed flatly, the overlay layer 3 made from a resin with the film thickness of 5 µm is formed on the surface thereof, and the surface of the overlay layer 3 is also formed flatly.

As is understood from a state before the test and a state after the load has been applied in Figure 2, plastic deformation does not occur in the samples 1 and 2 of the comparative examples before and after the static load has been applied, and accordingly it is understood that elastic deformation has occurred in the overlay layer 3.
On the other hand, in the sample of the present invention, the height of the ridge portion 2b decreases from 2.8 µm to 2.0 µm, and it is understood that the ridge portion 2b is plastically deformed in spite of the fact that the overlay layer 3 made from a synthetic resin is provided. This can be understood to be because the load has been received not by the overlay layer 3, but mainly by the ridge portion 2b of the bearing alloy layer 2, since the thickness of the overlay layer 3 made from the synthetic resin is set so thinly as 1 µm.

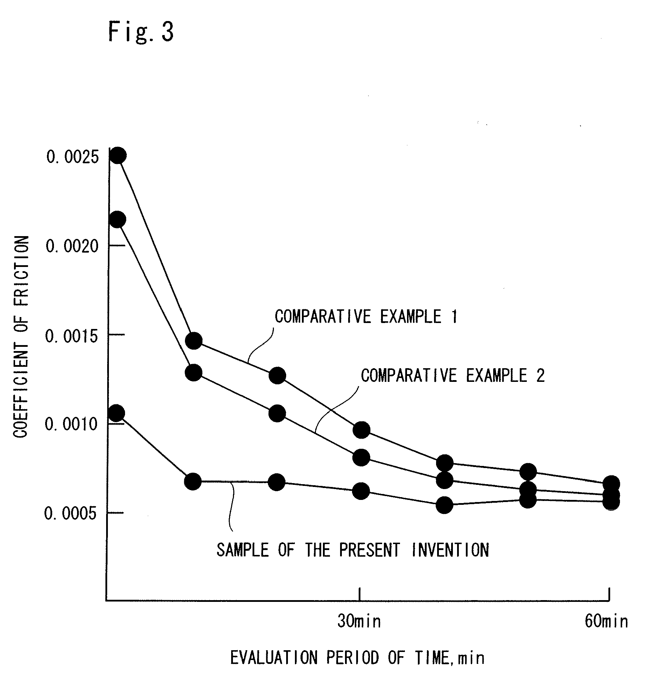

Next, Figure 3 is a graph illustrating the result of a test of measuring the conformability and low friction properties between the sliding bearing and a rotary shaft, for the sample of the present invention and the samples 1 and 2 of the comparative examples which have been described above. This test was conducted on the following test conditions.
Size of bearing: diameter of 42 mm x width of 16.4 mm
Lubricating oil: 5W-30
Material of rotary shaft: quenched S45C
Number of revolutions: 1,300 rpm
Surface pressure: 50 MPa
Temperature: 140°C
As is illustrated in Figure 3, in the sample of the present invention, the above described ridge portion 2b is plastically deformed to conform to the shaft in an early stage, and the coefficient of friction shown after the sample has conformed to the shaft can be kept small because the rotary shaft comes in contact with and slides on the overlay layer 3 made from the low-friction synthetic resin.
On the other hand, in the samples 1 and 2 of the comparative examples, a coefficient of friction greatly decreases in an early stage of the test, but this phenomenon originates in the wear of the overlay layer 3 and does not originate in the plastic deformation; and when the sliding bearing conforms to the shaft as the wear progresses, the rotary shaft comes in contact with and slides on the overlay layer 3 made from the low-friction synthetic resin, and accordingly the coefficient of friction can be kept small. However, the samples 1 and 2 of the comparative examples take a period of time before the wear of the overlay layer 3 progresses and the overlay layer 3 conforms to the shaft as compared with the sample of the present invention, and result in causing a power loss of an engine or the like because of having a larger coefficient of friction than that of the sample of the present invention, during the period of time.
In addition, in the sample of the present invention, the overlay layer 3 sufficiently followed the plastic deformation of the ridge portion 2b, and a defect such as the exfoliation of the overlay layer 3 did not occur either.

### Reference Signs List

- 1: Sliding bearing
- 2: Bearing alloy layer
- 2a: Annular groove
- 2b: Ridge portion
- 3: Overlay layer

## Claims

1. A sliding bearing which has annular or spiral grooves formed along a circumferential direction on a sliding surface of the sliding bearing, consequently has a ridge portion that extends in the circumferential direction and is formed between adjacent annular grooves in the axial direction, and is consequently structured so as to support a rotary shaft with the top of each ridge portion, the sliding bearing comprising:
a bearing alloy layer which has the annular grooves and the ridge portion formed thereon; and an overlay layer which is made from a low-friction synthetic resin and covers the surface of the bearing alloy layer, wherein the overlay layer forms an uneven face so that the surface of the overlay layer follows an uneven face of the surface of the bearing alloy layer, plastically deforms the ridge portion when a load is applied to the sliding bearing from the rotary shaft, and thereby makes the sliding bearing conform to the rotary shaft.

2. The sliding bearing according to claim 1, wherein a film thickness of the overlay layer is 2.5 µm or less.

3. The sliding bearing according to claim 1 or 2, wherein a height of the ridge portion in the overlay layer is in a range of 1 to 8 µm and a pitch of the annular grooves is in a range of 0.1 to 0.4 mm.

4. The sliding bearing according to any one of claims 1 to 3, wherein the bearing alloy layer is made from a copper-based bearing alloy or an aluminum-based bearing alloy.

5. The sliding bearing according to any one of claims 1 to 4, wherein the overlay layer contains one or more substances among molybdenum disulfide (MoS₂), graphite, BN (boron nitride), tungsten disulfide (WS₂), PTFE (polytetrafluoroethylene), a fluororesin and Pb as a solid lubricant, and uses a polyimide resin, a polyamide imide resin, a diisocyanate-modified, a BPDA-modified or sulfone-modified resin of the aforementioned resins, an epoxy resin or a phenol resin, as a thermosetting resin for binding the solid lubricant.
